# EUROPÄISCHE PATENTSCHRIFT

(11) **EP 3 689 112 B1**
(45) Veröffentlichungstag und Bekanntmachung des Hinweises auf die Patenterteilung: **24.01.2024**
(21) Anmeldenummer: 18795398.9
(22) Anmeldetag: 22.10.2018
(51) Int. Cl.: H05B 47/18

(54) **ERWEITERTE SIGNALISIERUNGSMÖGLICHKEIT IN EINEM DALI-SYSTEM**
EXTENDED SIGNALLING CAPACITY IN A DALI SYSTEM
POSSIBILITÉ DE SIGNALISATION ÉTENDUE DANS UN SYSTÈME DALI

(30) Priorität: 06.11.2017 DE 102017219659
(43) Veröffentlichungstag der Anmeldung: 05.08.2020
(73) Patentinhaber: Tridonic GmbH & Co. KG, 6851 Dornbirn (AT)
(72) Erfinder: KISTLER, Roger, 8755 Ennenda (CH); KÜNZLI, Markus, 8750 Glarus (CH)
(74) Vertreter: Rupp, Christian
(86) Internationale Anmeldenummer: PCT/EP2018/078926
(87) Internationale Veröffentlichungsnummer: WO 2019/086289

(56) Entgegenhaltungen:
- WO-A2-2009/114889
- DE-A1-102010 020 746
- DE-A1-102016 201 390
- DE-U1-202012 008 421
- DE-U1-202015 104 940
- US-A- 5 347 515
- US-A1- 2010 213 759
- US-A1- 2012 134 394

## Beschreibung

### 1. Gebiet der Erfindung

Die vorliegende Erfindung betrifft ein Signalisierungsgerät zur Verwendung in einem DALI-System mit einem DALI-Bus; ein DALI-Gerät zur Verwendung in einem DALI-System mit einem DALI-Bus; ein DALI-System mit einem DALI-Bus, wenigstens einem solchen erfindungsgemäßen Signalisierungsgerät und wenigstens einem solchen DALI-Gerät; eine Verwendung eines solchen erfindungsgemäßen Signalisierungsgerätes in einem DALI-System mit einem DALI-Bus sowie eine Verwendung eines solchen erfindungsgemäßen Signalisierungsgerätes und eines solchen erfindungsgemäßen DALI-Gerätes.

### 2. Hintergrund

Aus dem Stand der Technik sind DALI-Systeme mit einem DALI-Bus bekannt, in denen Geräte über den DALI-Bus miteinander verbunden sind, um gemäß dem DALI-Industriestandard über den DALI-Bus miteinander zu kommunizieren. Die Abkürzung DALI steht hierbei für "Digital Addressable Lighting Interface". Ein Gerät, das an einen DALI-Bus anschließbar ist und gemäß dem DALI-Industriestandard über den DALI-Bus kommunizieren kann wird auch DALI-Gerät genannt. DALI-Geräte sind insbesondere Lichttechnikgeräte wie z.B. ein Leuchtmittel-Betriebsgerät zum Betreiben wenigstens eines Leuchtmittels oder ein Lichtsensor zum Erfassen des Umgebungslichts.

Typischerweise werden in einem DALI-System die an den DALI-Bus angeschlossenen DALI-Geräte von einem zentralen DALI-Gerät dadurch angesteuert, dass DALI-Signale als Steuersignale ausgehend von dem zentralen DALI-Gerät über den DALI-Bus an alle an dem DALI-Bus angeschlossene DALI-Geräte übertragen werden. Hierbei können einzelne an dem DALI-Bus angeschlossene DALI-Geräte über ihre jeweilige Betriebsadresse angesteuert werden.

In der Praxis hat sich nun gezeigt, dass es wünschenswert ist, zusätzlich zu der vorstehend beschriebenen normalen zentralen DALI-Ansteuerung eine manuelle Ansteuerung der DALI-Geräte durch ein Signalisierungsgerät, wie z.B. einen Taster oder einen Sensor, zu ermöglichen.

Gemäß dem Stand der Technik sind hierfür schon mehrere Lösungsansätze bekannt. Gemäß einem ersten Lösungsansatz wird ein manuell anzusteuerndes DALI-Gerät mit einer zusätzlichen Schnittstelle neben der DALI-Schnittstelle zum Anschließen an einen DALI-Bus versehen, über welche zusätzliche Schnittstelle das DALI-Gerät an ein Signalisierungsgerät für die manuelle Ansteuerung angeschlossen werden kann. Dieser erste Lösungsansatz hat den Nachteil, dass an dem DALI-Gerät immer zwei separate Schnittstellen - eine für den DALI-Bus und eine für das Signalisierungsgerät - benötigt werden. Dies erhöht die Anzahl der benötigten Komponenten und damit auch den Platzbedarf. Ebenfalls erfordert dies in der Installation separat geführte Leitungen um beide Komponenten anschließen zu können.

Gemäß einem zweiten Lösungsansatz wird das manuell anzusteuernde DALI-Gerät mit einer Schnittstelle versehen, die sowohl für ein Anschließen an einen DALI-Bus wie auch für ein Anschließen an ein Signalisierungsgerät für die manuelle Ansteuerung geeignet ist. D.h. entweder wird die Schnittstelle an einen DALI-Bus angeschlossen, um durch DALI-Signale gesteuert zu werden, oder die Schnittstelle wird an ein Signalisierungsgerät angeschlossen, um ausgehend von diesem manuell angesteuert zu werden. Dieser zweite Lösungsansatz hat somit den Nachteil, dass eine Ansteuerung über einen DALI-Bus und eine manuelle Ansteuerung über ein Signalisierungsgerät nicht gleichzeitig erfolgen kann.

Gemäß einem dritten Lösungsansatz wird ein zusätzliches Modul mit integriertem Mikrokontroller vorgesehen, über das die durch das Signalisierungsgerät zur manuellen Ansteuerung erzeugten Signale in DALI-Signale umgewandelt werden können. Dieser dritte Lösungsansatz hat den Nachteil, dass das zusätzliche Modul mit integriertem Mikrokontroller den finanziellen Aufwand stark ansteigen lässt.

Gemäß dem Patent EP 1 338 181 B1 werden bei einem an einen DALI-Bus angeschlossenen DALI-Gerät zeitweise manuell die DALI-Befehle außer Kraft gesetzt, indem die DALI-Befehle durch manuell erzeugte Befehle ersetzt werden. Diese lokale manuelle Steuerung (unter Außerkraftsetzung der bestehenden DALI-Ansteuerung) eines DALI-Gerätes wird dadurch ermöglicht, dass die Signallängen unter einem vorbestimmten Schwellenwert als DALI-Signale bzw. DALI-Steuerbefehle interpretiert werden, während Signallängen oberhalb des Schwellenwerts als manuelles Außerkraftsetzen und Überschreiben ("override") und folglich als Signale der manuellen Steuerung interpretiert werden. In diesem manuellen Betriebsmodus liegt dann auch der Informationsgehalt des Signals in der Länge des Signals selbst. Somit ist der Lösungsansatz des Patents EP 1 338 181 B1 dahingehend nachteilig, dass ein Parallelbetrieb bzw. ein gleichzeitiger Betrieb des DALI-Betriebsmodus, in dem DALI-Signale zur Ansteuerung des DALI-Gerätes verwendet werden, und des manuellen Betriebsmodus, bei dem der Informationsgehalt des Signals in der Länge des Signals selbst liegt, nicht möglich ist.

Die Druckschrift WO 2009/114889 A2 offenbart ein Signalisierungsgerät zur Verwendung in einem DALI-System mit einem DALI-Bus gemäß dem Oberbegriff des Patentanspruchs 1.

Die Druckschrift US 5,347,515 A offenbart ein Signalisierungsgerät für Sicherheits- bzw. Einbruchsschutzsysteme, und die Druckschrift DE 20 2012 008421 U1 offenbart ein Betriebsgerät für Leuchtmittel. Beide Vorrichtungen sind nicht zur Verwendung in einem DALI-System mit einem DALI-Bus vorgesehen.

Im Lichte des vorstehenden Standes der Technik ist es daher eine Aufgabe der vorliegenden Erfindung, DALI-Sytem bereitzustellen, mit denen eine manuelle Ansteuerung des DALI-Gerätes zusätzlich zu der Ansteuerung mit DALI-Signalen ohne die vorstehenden Nachteilen möglich ist. Insbesondere soll erreicht werden, dass ein DALI-Gerät über einen DALI-Bus durch DALI-Signale angesteuert und gleichzeitig bzw. parallel manuell angesteuert werden kann.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### 3. Ausführliche Beschreibung der Erfindung

Gemäß der vorliegenden Erfindung wird ein DALI-System nach Anspruch 1 vorgeschlagen. Die abhängigen Ansprüche bilden die Erfindung weiter.

### 4. Beschreibung bevorzugter Ausführungsformen

Nachfolgend wird eine detaillierte Beschreibung der Figuren gegeben. Darin zeigt:
**Figur 1** einen schematischen Schaltplan einer bevorzugten Ausführungsform eines erfindungsgemäßen DALI-Systems mit einem erfindungsgemäßen Signalisierungsgerät und drei erfindungsgemäßen DALI-Geräten.
**Figur 2** den schematischen Schaltplan der Figur 1, wobei eine bevorzugte Ausführungsform des erfindungsgemäßen Signalisierungsgerätes schematisch gezeigt wird.
**Figur 3** ein Beispiel einer Übertragung eines Signals über einen DALI-Bus ausgehend von dem erfindungsgemäßen Signalisierungsgerät
**Figur 4** ein Beispiel einer gleichzeitigen Übertragung eines Signals ausgehend von dem erfindungsgemäßen Signalisierungsgerät sowie eines DALI-Signals über einen DALI-Bus

In den Figuren werden sich entsprechende Elemente mit den gleichen Bezugszeichen markiert

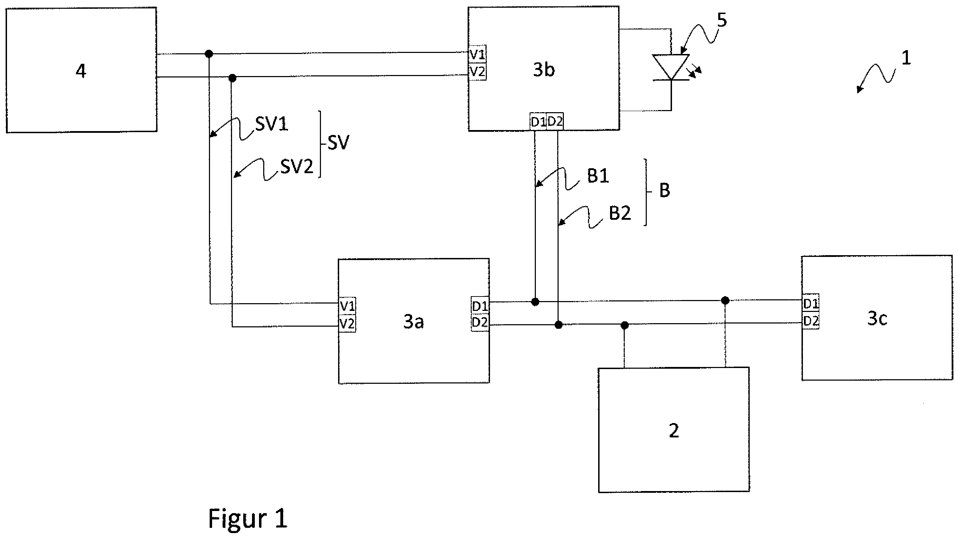

Die Figur 1 zeigt einen schematischen Schaltplan einer bevorzugten Ausführungsform eines erfindungsgemäßen DALI-Systems mit einem erfindungsgemäßen Signalisierungsgerät und drei erfindungsgemäßen DALI-Geräten.

Das DALI-System 1 der Figur 1 umfasst einen DALI-Bus B, ein Signalisierungsgerät 2 sowie drei DALI-Geräte 3a, 3b und 3c. Die elektrische Energieversorgungsquelle 4 und/oder das Versorgungsnetz SV können ein Teil des DALI-Systems 1 sein oder extern zu dem DALI-System 1 angeordnet sein.

Vorzugsweise kann das erfindungsgemäße DALI-System ein oder mehrere Signalisierungsgeräte und ein oder mehrere DALI-Geräte umfassen. Für die nachfolgenden Beschreibung der vorliegenden Erfindung wird davon ausgegangen, dass das DALI-System 1 ein Signalisierungsgerät 2 und drei DALI-Geräte 3a, 3b und 3c umfasst.

Die elektrische Energieversorgungsquelle 4 ist dazu eingerichtet, für das DALI-System 1, insbesondere die DALI-Geräte 3a und 3b, eine elektrische Energie, Strom und/oder Spannung bereitzustellen. Vorzugsweise entspricht die elektrische Energieversorgungsquelle 4 einer Wechselspannungsquelle, insbesondere dem Stromnetz, das vorzugsweise eine Wechselspannung von 230 Volt bereitstellt. Alternativ kann die elektrische Energieversorgungsquelle 4 auch einer Gleichspannungsquelle, wie z.B. einer vorzugsweise wiederaufladbaren Batterie, entsprechen. Erfindungsgemäß kann jede dem Fachmann bekannte elektrische Energieversorgungquelle, die zur elektrischen Versorgung von DALI-Geräten eingerichtet ist, für die elektrische Energieversorgungsquelle 4 verwendet werden.

Gemäß der Figur 1 werden nur die DALI-Geräte 3a und 3b ausgehend von der elektrischen Energieversorgungsquelle 4 elektrisch versorgt. Das DALI-Gerät 3c wird vorzugsweise entweder über eine interne Energieversorgungsquelle oder über die Busspannung des DALI-Busses B elektrisch versorgt. Das DALI-Gerät 3c kann aber auch ausgehend von der elektrischen Energieversorgungquelle 4 versorgt werden.

Zur elektrischen Energieversorgung der DALI-Geräte 3a und 3b sind diese über ein Versorgungsnetz SV, insbesondere zwei Versorgungsleitungen SV1 und SV2, mit der elektrischen Energieversorgungsquelle 4 elektrisch verbunden. Hierbei kann die Versorgungsleitung SV1 einem stromführenden Phasenleiter ("P-Leiter") entsprechen und die Versorgungsleitung SV2 kann einem Neutralleiter ("N-Leiter") entsprechend, über den der Strom von dem jeweiligen DALI-Gerät 3a, 3b zu der elektrischen Energieversorgungsquelle 4 zurückfließt. Die zwei DALI-Geräte 3a und 3b umfassen jeweils einen Versorgungseingang mit zwei Versorgungsanschlüssen V1 und V2, an die die zwei Versorgungsleitungen SV1 und SV2 angeschlossen sind.

Gemäß der Figur 1 umfasst der DALI-Bus B zwei Busleitungen B1 und B2. Die drei DALI-Geräte 3a, 3b und 3c sind jeweils über ihre DALI-Schnittstelle D1, D2 an den DALI-Bus B angeschlossen. Hierbei ist jeweils die Busleitung B1 des DALI-Busses B an den DALI-Anschluss D1 der DALI-Schnittstelle und die Busleitung B2 des DALI-Busses B an den DALI-Anschluss D2 der DALI-Schnittstelle eines DALI-Gerätes angeschlossen.

Vorzugsweise entspricht die Busspannung des DALI-Busses im Ruhezustand einem Spannungswert innerhalb des oberen Spannungswertebereichs für die Übertragung eines DALI-Signals mit einem High-Pegel gemäß dem DALI-Standard. Insbesondere entspricht die Busspannung im Ruhezustand einem Spannungswert zwischen 9,5 und 22,5 Volt.

Der DALI-Bus B wird vorzugsweise durch eine zu der elektrischen Energieversorgungsquelle 4 separate elektrische Energieversorgungsquelle oder durch ein an den DALI-Bus B angeschlossenes DALI-Gerät mit einer Spannung, Strom und/oder elektrischen Energie elektrisch versorgt.

Erfindungsgemäß kann jeder dem Fachmann bekannte DALI-Bus verwendet werden, wobei die vorliegende Erfindung nicht auf eine bestimmte Art der Spannungsversorgung des DALI-Busses beschränkt ist.

Die DALI-Geräte 3a, 3b und 3c der Figur 1 umfassen jeweils eine DALI-Schnittstelle mit wenigstens zwei DALI-Anschlüssen D1 und D2, über die sie mit dem DALI-Bus B elektrisch verbunden werden können, um dann in einem verbundenen bzw. angeschlossenen Zustand über den DALI-Bus gemäß dem DALI-Industriestandard miteinander kommunizieren zu können.

Wie bereits vorstehend ausgeführt entspricht ein DALI-Gerät vorzugsweise einem Gerät, insbesondere Lichttechnikgerät, das an einem DALI-Bus anschließbar ist und dazu eingerichtet ist, über den DALI-Bus Daten oder Informationen gemäß dem DALI-Standard zu übertragen und/oder zu empfangen. D.h. ein DALI-Gerät ist vorzugsweise dazu eingerichtet, über einen DALI-Bus DALI-Signale zu übertragen und/oder zu empfangen.

Gemäß der Figur 1 entspricht das DALI-Gerät 3a vorzugsweise einer zentralen Steuereinheit, durch die die anderen DALI-Geräte des DALI-Systems 1 über den DALI-Bus B gemäß dem DALI-Industriestandard zentral angesteuert werden können. Das DALI-Gerät 3b entspricht vorzugsweise einem Betriebsgerät zur elektrischen Versorgung wenigstens eines Leuchtmittels, wobei an das DALI-Gerät 3b eine Leuchtmittelstrecke 5 mit wenigstens einem Leuchtmittel, insbesondere eine Leuchtdiodenstrecke mit wenigstens einer Leuchtdiode, angeschlossen ist, um durch das DALI-Gerät 3b mit einer Spannung, Strom und/oder elektrischen Energie versorgt zu werden. Das DALI-Gerät 3c entspricht vorzugsweise einer Sensoranordnung mit wenigstens einem Sensor, wie z.B. einem Helligkeitssensor, einem Anwesenheits- und/oder Bewegungssensor oder einem Temperatursensor.

Folglich kann in dem DALI-System 1 der Figur 1 die zentrale Steuereinheit 3a auf der Basis einer Erfassung der Sensoranordnung 3c, wie z.B. auf der Basis einer erfassten Umgebungshelligkeit, das Betriebsgerät 3b ansteuern, um die elektrische Versorgung der Leuchtmittelstrecke 5 auf der Basis der Erfassung der Sensoranordnung 3c zu steuern. Hierbei erfolgt vorzugsweise die Kommunikation zwischen der zentralen Steuereinheit 3a, dem Betriebsgerät 3b und der Sensoranordnung 3c durch DALI-Signale, die über den DALI-Bus gemäß dem DALI-Industriestandard übertragen werden.

Das Signalisierungsgerät 2 ist an den DALI-Bus B, insbesondere an die zwei Busleitungen B1 und B2 angeschlossen. Wie bereits vorstehend ausgeführt, ist das Signalisierungsgerät 2 gemäß der vorliegenden Erfindung dazu eingerichtet, die Busspannung des DALI-Busses B im Ruhezustand auf einen vorbestimmten Spannungswert innerhalb des oberen Spannungswertebereichs des DALI-Standards (für die Busspannung des DALI-Busses zur Übertragung eines DALI-Signals mit einem High-Pegel) zu ändern, um wenigstens ein digitales Signal, insbesondere ein binär-codiertes Signal, oder wenigstens ein analoges Signal über den DALI-Bus zu übertragen. Die DALI-Geräte 3a, 3b und 3c sind vorzugsweise alle dazu eingerichtet, die Änderung des Spannungswertes der Busspannung im Ruhezustand auf den vorbestimmten Spannungswert zu erfassen, um das ausgehend von dem Signalisierungsgerät 2 über den DALI-Bus übertragene wenigstens eine digitale oder analoge Signal zu empfangen.

D.h. die DALI-Geräte 3a, 3b und 3c sind vorzugsweise alle dazu eingerichtet, die Änderung des Spannungswertes der Busspannung im Ruhezustand auf den vorbestimmten Spannungswert als digitales oder analoges Signal zu erkennen und dieses auszuwerten.

Folglich können die an den DALI-Bus B angeschlossenen DALI-Geräte 3b und 3c sowohl durch die Übertragung von DALI-Signalen gemäß dem DALI-Industriestandard über den DALI-Bus B ausgehend von der zentralen Steuereinheit 3a zentral angesteuert werden wie auch durch die Übertragung wenigstens eines digitalen oder analogen Signals über den DALI-Bus B ausgehend von dem Signalisierungsgerät 2 manuell angesteuert werden.

Dies ist vorteilhaft, da durch ein einfaches Anschließen des Signalisierungsgerätes 2 an den DALI-Bus B eine manuelle Ansteuerung der DALI-Geräte 3b und 3c zusätzlich zu der zentralen Ansteuerung der DALI-Geräte 3b und 3c ausgehend von der zentralen Steuereinheit 3a erreicht werden kann.

Vorzugsweise kann das erfindungsgemäße DALI-System auch ein oder mehrere DALI-Geräte umfassen, die eine Veränderung des Spannungswertes der Busspannung auf den vorbestimmten Spannungswert innerhalb des oberen Spannungswertebereichs des DALI-Standards nicht erfassen können und folglich für eine manuelle Ansteuerung durch das Signalisierungsgerät 2 nicht eingerichtet sind.

Insbesondere ist das Signalisierungsgerät 2 zur manuellen Ansteuerung wenigstens eines DALI-Gerätes dazu eingerichtet, den Spannungswert der Busspannung des DALI-Busses B im Ruhezustand auf einen vorbestimmten Spannungswert innerhalb des oberen Spannungswertebereichs des DALI-Standards zu begrenzen oder zu verringern, der kleiner ist als der Spannungswert der Busspannung im Ruhezustand. Folglich sind die erfindungsgemäßen DALI-Geräte dann dazu eingerichtet, diese Begrenzung der Busspannung im Ruhezustand auf den vorbestimmten Spannungswert zu erfassen und dadurch wenigstens ein digitales oder analoges Signal ausgehend von dem Signalisierungsgerät 2 zu empfangen.

Wie bereits vorstehend ausgeführt, können während der manuellen Ansteuerung der DALI-Geräte durch das Signalisierungsgerät weiterhin die DALI-Geräte durch die Übertragung von DALI-Signalen über den DALI-Bus angesteuert werden.

D.h. gemäß der vorliegenden Erfindung ist eine Übertragung von wenigstens einem digitalen oder analogen Signal ausgehend von dem Signalisierungsgerät 2 über den DALI-Bus B und eine Übertragung von wenigstens einem DALI-Signal gemäß dem DALI-Industriestandard ausgehend von einem DALI-Gerät, wie zum Beispiel der zentralen Steuereinheit 3a, über den DALI-Bus B gleichzeitig bzw. parallel möglich. Somit kann eine zentrale Ansteuerung und eine manuelle Ansteuerung der DALI-Geräte über den DALI-Bus B gleichzeitig bzw. parallel erfolgen.

Gemäß der Erfindung kann es auch möglich sein, dass keine zentrale Steuereinheit 3a am DALI-Bus B vorhanden ist, sondern ein DALI-Gerät. Beispielsweise kann das Betriebsgerät 3b neben der Funktion der elektrischen Versorgung des wenigstens eines Leuchtmittels, wie beispielsweise der Leuchtmittelstrecke 5, zusätzlich die Speisung der Busspannung des DALI-Busses B übernehmen. Zu diesem Zweck kann beispielsweise ein DC-DC-Wandler in dem DALI-Gerät 3b angeordnet sein, der ausgehend von dem Versorgungsnetz SV, insbesondere über die zwei Versorgungsleitungen SV1 und SV2, an den DALI-Anschlüssen D1, D2 die Busspannung für den DALI-Bus B ausgeben kann.

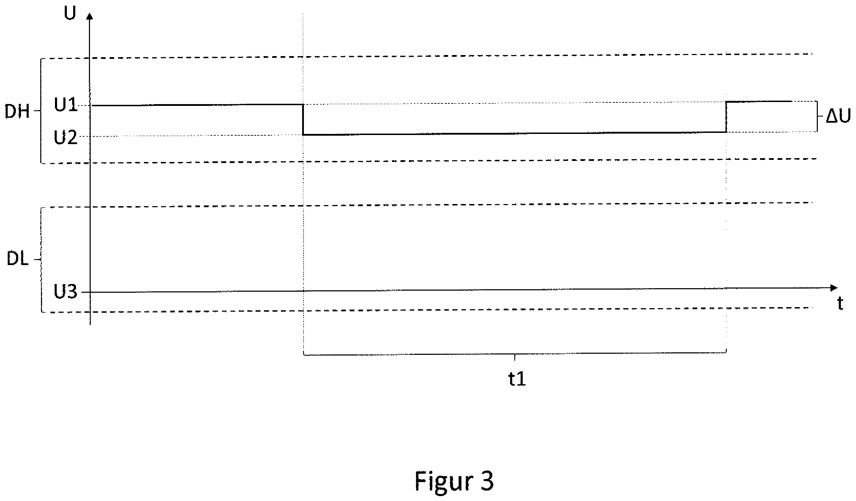

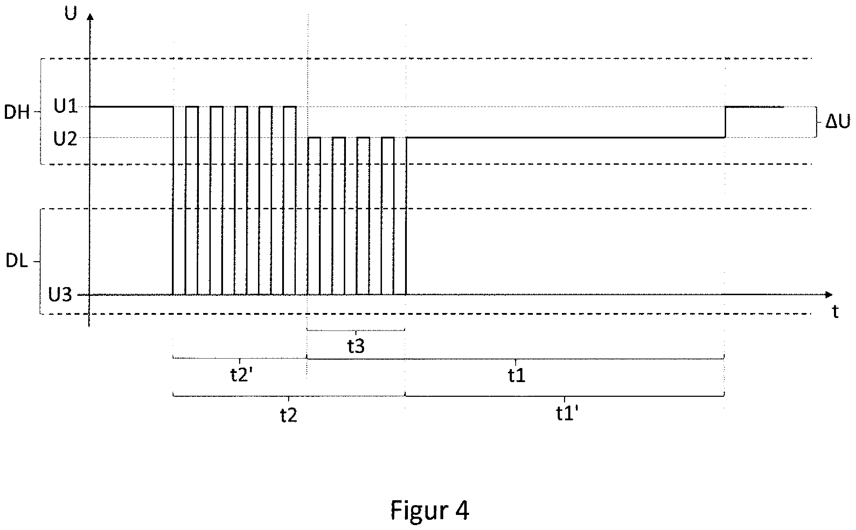

In den nachfolgenden Figuren 3 und 4 werden noch Beispiele für diese erfindungsgemäße Übertragung von Steuersignalen über einen DALI-Bus gezeigt.

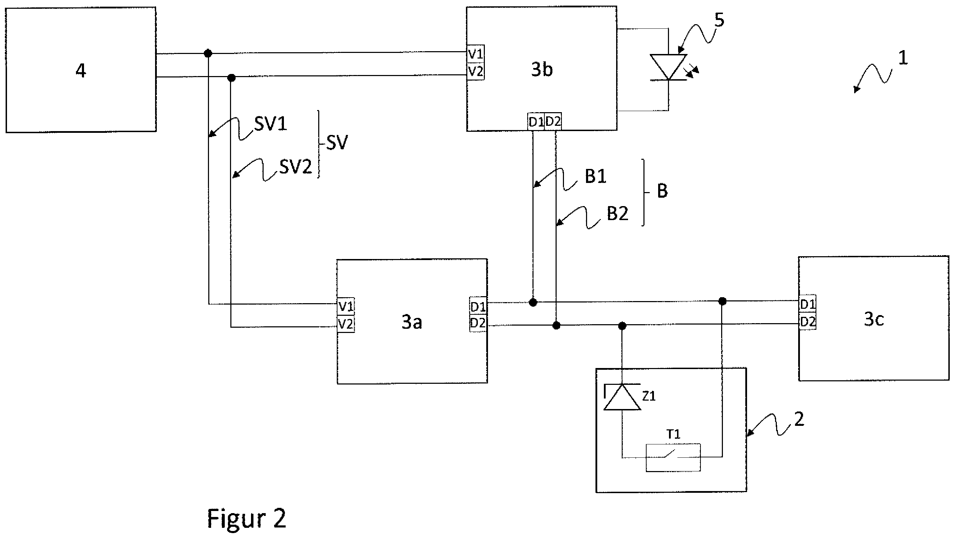

Die Figur 2 zeigt den schematischen Schaltplan der Figur 1, wobei eine bevorzugte Ausführungsform des erfindungsgemäßen Signalisierungsgerätes schematisch gezeigt wird.

Gemäß der Figur 2 umfasst das Signalisierungsgerät 2 eine Zenerdiode Z1 sowie einen Taster T1. Wenn der Taster T1 durch einen Benutzer betätigt wird, dann schließt der Taster T1 den Stromkreis zwischen der Busleitung B1 und der Busleitung B2, in dem die Zenerdiode Z1 angeordnet ist, sodass die Zenerdiode Z1 die Busspannung auf den vorbestimmten Spannungswert im oberen Spannungswertebereich des DALI-Standards begrenzt. Folglich kann durch die Betätigung des Tasters T1 wenigstens ein digitales oder ein analoges Signal über den DALI-Bus B übertragen werden.

Die Busspannung im Ruhezustand entspricht vorzugsweise einer logischen Null ("0") und jeder andere Spannungswert innerhalb des oberen Spannungswertebereichs des DALI-Standards, insbesondere der vorbestimmte Spannungswert, entspricht vorzugsweise einer logischen Eins ("1"), wenn durch die Begrenzung der Zenerdiode Z1 wenigstens ein digitales Signal übertragen wird.

Da der Taster T1 durch die Busspannung des DALI-Busses B elektrisch versorgt wird, welche vorzugsweise zwischen 9,5 und 22,5 Volt beträgt, und von den Versorgungsleitungen SV1 und SV2 sowie der elektrischen Energieversorgungsquelle 4 galvanisch getrennt ist, kann ein kostengünstiger Taster T1 verwendet werden.

Vorzugsweise kann das Signalisierungsgerät 2 auch mehr als nur einen Taster T1 aufweisen, wobei dann die mehreren Taster vorzugsweise parallel an den DALI-Bus B angeschlossen werden.

Vorzugsweise wird für die Zeitdauer, die der Taster T1 betätigt wird, die Busspannung durch die Zenerdiode Z1 auf den vorbestimmten Spannungswert innerhalb des oberen Spannungswertebereichs des DALI-Standards begrenzt. Folglich kann vorzugsweise zusätzlich zu der Betätigung des Tasters über die Länge der Zeitdauer der Betätigung des Tasters eine Information, insbesondere Steuerinformation, über den DALI-Bus übertragen werden. Zum Beispiel kann durch ein kurzes Betätigen des Tasters, was zu einer kurzen Änderung, insbesondere Begrenzung bzw. Verringerung, der Busspannung auf den vorbestimmten Spannungswert führt, ein Steuersignal über den DALI-Bus B übertragen werden, das das Betriebsgerät 3b dazu veranlasst, die Leuchtmittelstrecke 5 einzuschalten oder auszuschalten. Durch ein zweites kurzes Betätigen des Tasters kann dann vorzugsweise ein Steuersignal über den DALI-Bus übertragen werden, das das Betriebsgerät 3b dazu veranlasst, die Leuchtmittelstrecke wieder auszuschalten oder einzuschalten.

Vorzugsweise kann nun durch ein längeres Betätigen des Tasters T1, was zu einer längeren Änderung, insbesondere Begrenzung, der Busspannung auf den vorbestimmten Spannungswert führt, ein Steuersignal über den DALI-Bus übertragen werden, das das Betriebsgerät 3b dazu veranlasst, die Lichtabgabe der Leuchtmittelstrecke 5 zu dimmen. Hierbei hängt dann der Dimmgrad vorzugsweise von der Länge der Zeitdauer der Betätigung des Tasters T1 und folglich der Länge der Zeitdauer der Änderung, insbesondere Begrenzung, der Busspannung auf den vorbestimmten Spannungswert ab.

D.h. es kann vorzugsweise über die Länge der Zeitdauer der durch das Signalisierungsgerät 2 verursachten Änderung, insbesondere Begrenzung, der Busspannung des DALI-Busses B auf den vorbestimmten Spannungswert eine Steuerinformation bereitgestellt werden, wie z.B. ein Dimmgrad zum Dimmen einer Leuchtmittelstrecke, wobei vorzugsweise mit längerer Zeitdauer der Dimmgrad höher bzw. stärker ist.

Vorzugsweise wird das durch das erfindungsgemäße Signalisierungsgerät übertragene Signal durch eine an dem DALI-Bus angeschlossene zentrale Steuereinheit ausgewertet, welche dann (abhängig von ihrer Konfiguration) auf der Basis des Signals wenigstens ein DALI-Signal zur Ansteuerung wenigstens eines am DALI-Bus angeschlossenen DALI-Gerätes, wie z.B. ein Betriebsgerät oder Konverter, erzeugt und an das wenigstens eine DALI-Gerät weiterleitet.

Zum Beispiel kann in dem DALI-System der Figur 1 die zentrale Steuereinheit 3a ein durch das Signalisierungsgerät 2 über den DALI-Bus B übertragenes digitales oder analoges Signal auswerten, um dann auf der Basis dieser Auswertung DALI-Signale zur Ansteuerung des Betriebsgerätes 3b zu erzeugen und an das Betriebsgerät 3b zu übertragen.

Vorzugsweise ist das erfindungsgemäße DALI-Gerät 3a, 3b und 3c dazu eingerichtet, die Tasterbetätigung des Tasters T1 hinsichtlich der Betätigungsdauer und/oder der Wiederholung der Betätigung zu erfassen und auszuwerten. Insbesondere ist das erfindungsgemäße DALI-Gerät dazu eingerichtet, eine Änderung, insbesondere Begrenzung, der Busspannung im Ruhezustand auf den vorbestimmten Spannungswert innerhalb des oberen Spannungswertebereichs des DALI-Standards zu erfassen und die Zeitdauer dieser Änderung als Tasterbetätigungszeitdauer zu messen. Das erfindungsgemäße DALI-Gerät ist dann vorzugsweise dazu eingerichtet, ein Ende der Betätigung des Tasters zu erkennen, wenn die Busspannung ausgehend von dem vorbestimmten Spannungswert wieder auf den ursprünglichen Busspannungswert des DALI-Busses im Ruhezustand zurückkehrt.

Wie aus Figur 2 ersichtlich ist das Signalisierungsgerät 2 vorteilhaft, da dieses durch handelsübliche und preisgünstige Bauelemente, wie z.B. eine Zenerdiode Z1 und einen Taster T1, einfach implementiert werden kann und direkt an den DALI-Bus angeschlossen werden kann, ohne dass eine zusätzliche Schnittstelle oder ein Adaptermodul benötigt wird.

Lediglich die an dem DALI-Bus angeschlossenen DALI-Geräte müssen dazu eingerichtet sein, die durch das Signalisierungsgerät 2 zur Übertragung wenigstens eines digitalen oder analogen Signals verursachte Änderung der Busspannung im Ruhezustand auf den vorbestimmten Spannungswert innerhalb des oberen Spannungswertebereichs des DALI-Standards zu erfassen, um das wenigstens eine digitale oder analoge Signal empfangen und auswerten zu können.

Hierbei kann erfindungsgemäß über die DALI-Schnittstelle oder eine zusätzliche Schnittstelle eines erfindungsgemäßen DALI-Gerätes das Verhalten des erfindungsgemäßen DALI-Gerätes als Antwort auf eine Erfassung der durch das Signalisierungsgerät 2 verursachten Busspannungsänderung auf den vorbestimmten Spannungswert konfiguriert oder eingestellt werden.

Das Signalisierungsgerät 2 kann zusätzlich oder alternativ ein Relais und/oder einen Sensor umfassen. Für den Fall, dass das Signalisierungsgerät 2 ein Relais umfasst, wird vorzugsweise durch ein Betätigen des Relais die Busspannung des DALI-Busses für die Zeitdauer der Betätigung des Relais auf den vorbestimmten Spannungswert geändert, insbesondere begrenzt. Für den Fall, dass das Signalisierungsgerät 2 einen Sensor umfasst, wird vorzugsweise aufgrund einer Erfassung des Sensors, wie z.B. eine Bewegung einer Person oder ein bestimmtes Helligkeitslevel, die Busspannung des DALI-Busses für die Zeitdauer der Erfassung des Sensor oder für eine vorbestimmte Zeitdauer auf den vorbestimmten Spannungswert geändert, insbesondere begrenzt.

Zum Beispiel kann das Signalisierungsgerät aufweisend einen Helligkeitssensor die Busspannung des DALI-Busses für eine vorbestimmte Zeitdauer auf den vorbestimmten Spannungswert ändern, insbesondere begrenzen, wodurch ein digitales oder analoges Signal mit einer der vorbestimmten Zeitdauer entsprechenden Signallänge bzw. Signaldauer über den DALI-Bus übertragen wird. Diese Signallänge entspricht dann vorzugsweise einem Dimmgrad zum Dimmen der Lichtabgabe einer an den DALI-Bus als DALI-Gerät angeschlossenen Leuchte. Alternativ kann die Signallänge auch eine Zeitdauer angeben, während welcher die Lichtabgabe einer an den DALI-Bus als DALI-Gerät angeschlossenen Leuchte auf einen vorbestimmten Dimmlevel eingestellt wird.

Das erfindungsgemäße DALI-System eignet sich insbesondere für sogenannte "selfpowered" DALI-Anwendungen, bei der ein DALI-Gerät in Form eines Betriebsgerätes die Speisung bzw. Spannungsversorgung des DALI-Busses bereitstellt. In einem solchen Fall kann ein Benutzer dann eine kleine "Insel"-Lösung unter Verwendung eines DALI-Busses, wenigstens eines erfindungsgemäßen DALI-Gerätes und wenigstens einem erfindungsgemäßen Signalisierungsgerät aufbauen. Zum Beispiel kann der Benutzer an den DALI-Bus als DALI-Geräte ein Betriebsgerät bzw. Treiber zur elektrischen Versorgung wenigstens einer Leuchtmittelstrecke und einen intelligenten Sensor anschließen.

Der intelligente Sensor ist vorzugsweise dazu eingerichtet, die Helligkeit zu überwachen und optional zusätzlich Funkbefehle, z.B. zur Farbsteuerung, zu empfangen sowie die erfasste Helligkeitsinformation und/oder die empfangenen Funkbefehle über den DALI-Bus gemäß dem DALI-Industriestandard zu übertragen. Der Benutzer kann dann zusätzlich an den DALI-Bus ein erfindungsgemäßes Signalisierungsgerät anschließen, um die Helligkeit und/oder das Ein- und Ausschalten der durch das Betriebsgerät elektrisch versorgten Leuchtmittelstrecke direkt beeinflussen zu können. Insbesondere umfasst das Signalisierungsgerät einen Taster, sodass der Benutzer durch Betätigung des Tasters die Helligkeit und/oder das Ein- und Ausschalten der durch das Betriebsgerät elektrisch versorgten Leuchtmittelstrecke beeinflussen bzw. manuell steuern kann. Hinsichtlich den Einzelheiten dieser manuellen Steuerung über das Signalisierungsgerät wird auf die vorstehenden Ausführungen sowie die nachfolgenden Ausführungen hinsichtlich der Figuren 3 und 4 verwiesen.

Die Figur 3 zeigt schematisch ein Beispiel einer Übertragung eines Signals über einen DALI-Bus ausgehend von dem erfindungsgemäßen Signalisierungsgerät.

Die Figur 3 zeigt die Busspannung U eines DALI-Busses über die Zeit t, wobei während der Zeitdauer t1 ein Signals durch ein an den DALI-Bus angeschlossenes erfindungsgemäßes Signalisierungsgerät über den DALI-Bus übertragen wird. Wie bereits vorstehend ausgeführt, kann das durch das Signalisierungsgerät übertragene Signal vorzugsweise ein digitales Signal, insbesondere binär-codiertes Signal, oder ein analoges Signal sein. Die Busspannung des DALI-Busses im Ruhezustand entspricht dem Spannungswert U1, der innerhalb des oberen Spannungswertebereich DH gemäß dem DALI-Standard für die Busspannung des DALI-Busses zur Übertragung eines DALI-Signals mit einem High-Pegel liegt.

Gemäß der Figur 3 begrenzt bzw. verringert das Signalisierungsgerät die Busspannung während der Zeitdauer t1 auf einen vorbestimmten Spannungswert U2, der kleiner als der Spannungswert U1 ist und ebenfalls in dem oberen Spannungswertebereich DH des DALI-Standards liegt, um ein Signal mit einer Signallänge bzw. Signaldauer t1 über den DALI-Bus zu übertragen. Der Unterscheidungswert bzw. Spannungsunterschied ΔU zwischen dem Spannungswert U1 der Busspannung im Ruhezustand und dem vorbestimmten Spannungswert U2, auf den das Signalisierungsgerät die Busspannung zur Übertragung wenigstens eines Signals ändert, ist vorzugsweise derart, dass die Spannungswerte U1 und U2 beide innerhalb des oberen Spannungswertebereichs DH gemäß dem DALI-Standard liegen.

In der Figur 3 wird auch der untere Spannungswertebereich DL gemäß dem DALI-Standard für die Busspannung des DALI-Busses zur Übertragung eines DALI-Signals mit einem Low-Pegel gezeigt. Da die Busspannung der Figur 3 zu keiner Zeit auf einen Spannungswert innerhalb des unteren Spannungswertebereichs DL abfällt, wird in der Figur 3 eine Übertragung eines DALI-Signals über den DALI-Bus nicht gezeigt.

Die Figur 4 zeigt schematisch ein Beispiel einer gleichzeitigen Übertragung eines Signals ausgehend von dem erfindungsgemäßen Signalisierungsgerät sowie eines DALI-Signals über einen DALI-Bus.

Gemäß der Figur 4 wird durch das erfindungsgemäße Signalisierungsgerät ein Signal über den DALI-Bus während der Zeitdauer t1 übertragen. Für weitere Informationen diesbezüglich wird auf die vorstehenden Ausführungen der Figur 3 verwiesen. Während der Zeitdauer t2 wird ferner ein DALI-Signal über den DALI-Bus übertragen, da während dieser Zeitdauer die Busspannung immer wieder auf den Spannungswert U3 innerhalb des unteren Spannungswertebereichs DL gemäß dem DALI-Standard abfällt, wobei der Spannungswert U3 vorzugsweise null Volt beträgt. Insbesondere wird dieses Abfallen der Busspannung auf den Spannungswert U3 zur Übertragung des DALI-Signals über den DALI-Bus durch ein wiederholtes Kurzschließen des DALI-Busses erreicht. Vorzugsweise entsprechen die dadurch erzeugten Spannungsimpulse einzelnen zu übertragenen Bits, die als Impulspaket das DALI-Signal bilden.

Gemäß der Figur 4 wird während der Zeitdauer t2' nur ein DALI-Signal über den DALI-Bus übertragen und während der Zeitdauer t1' wird nur ein Signals ausgehend von dem erfindungsgemäßen Signalisierungsgerät über den DALI-Bus übertragen.

Während der Zeitdauer t3 erfolgt eine gleichzeitige Übertragung eines Signals ausgehend von dem erfindungsgemäßen Signalisierungsgerät sowie eines DALI-Signals über den DALI-Bus. Denn während der Zeitdauer t3 ist zum einen die Busspannung im Ruhezustand auf den vorbestimmten Spannungswert U2 begrenzt und der vorbestimmte Spannungswert U2 fällt immer wieder auf den Spannungswert U3 innerhalb des unteren Spannungswertebereichs DL des DALI-Standards ab. Wie bereits vorstehend ausgeführt, kann das durch das Signalisierungsgerät übertragene Signal vorzugsweise ein digitales Signal, insbesondere binär-codiertes Signal, oder ein analoges Signal sein.

Da der vorbestimmte Spannungswert U2 innerhalb des oberen Spannungswertebereichs DH des DALI-Standards liegt, kann während der Zeitdauer t1 durch wiederholtes Absenken der Busspannung ausgehend von dem Spannungswert U2 auf den Spannungswert U3 ein DALI-Signal über den DALI-Bus übertragen werden. Da während der Übertragung des DALI-Signals die Busspannung vorzugsweise immer wieder auf einen Spannungswert innerhalb des oberen Spannungswertebereichs DH des DALI-Standards hochgezogen wird, kann die Änderung der Busspannung auf den vorbestimmten Spannungswert U2 auch während der Zeitdauer t2 erfasst werden.

Über die Zeitdauer t1 des Signals des Signalisierungsgerätes kann eine Steuerinformation bereitgestellt werden, wie zum Beispiel der Dimmgrad einer Lichtabgabe eines am DALI-Bus angeschlossenen DALI-Gerätes. Zum Beispiel je länger die Zeitdauer t1 desto größer bzw. stärker ist der Dimmgrad.

Gemäß der vorliegenden Erfindung ist eine gleichzeitige bzw. parallele Übertragung wenigstens eines Signals eines Signalisierungsgerätes und wenigstens eines DALI-Signals über einen DALI-Bus möglich, wobei das Signal zur manuellen Ansteuerung wenigstens eines an dem DALI-Bus angeschlossenen DALI-Gerätes dient.

## Patentansprüche

1. DALI-System (1) mit
- einem DALI-Bus (B),
- wenigstens einem DALI-Gerät (3a, 3b, 3c),
und wenigstens ein Signalisierungsgerät (2),
- wobei gemäß dem DALI-Standard ein oberer Spannungswertebereich (DH) für die Busspannung des DALI-Busses (B) zur Übertragung eines DALI-Signals mit einem High-Pegel über den DALI-Bus (B) festgelegt ist, und die Busspannung des DALI-Busses (B) im Ruhezustand innerhalb des oberen Spannungswertebereichs (DH) liegt,
- wobei gemäß dem DALI-Standard ein unterer Spannungswertebereich (DL) für die Busspannung des DALI-Busses (B) zur Übertragung eines DALI-Signals mit einem Low-Pegel über den DALI-Bus (B) festgelegt ist, und
- wobei das wenigstens eine DALI-Gerät (3a, 3b, 3c) (Fig. 2: 10) an den DALI-Bus (B) als Busteilnehmer angeschlossen ist,
- wobei das wenigstens eine Signalisierungsgerät (2) an den DALI-BUS (B) angeschlossen ist,
- wobei das wenigstens eine DALI-Gerät (3a, 3b, 3c) im angeschlossenen Zustand dazu eingerichtet ist, durch die Erfassung einer Verringerung der Busspannung des DALI-Busses (B) im Ruhezustand auf einen Spannungswert (U3) innerhalb des unteren Spannungswertebereichs (DL) wenigstens ein DALI-Signal zu empfangen,
- wobei das wenigstens eine Signalisierungsgerät (2) dazu eingerichtet ist, die Busspannung des DALI-Busses (B) im Ruhezustand auf einen vorbestimmten Spannungswert (U2) zu ändern,
**gekennzeichnet dadurch, dass**
wobei das wenigstens eine Signalisierungsgerät (2) im angeschlossenen Zustand ferner dazu eingerichtet ist, durch die Änderung der Busspannung auf den vorbestimmten Spannungswert (U2) innerhalb des oberen Spannungswertebereichs (DH) wenigstens ein Signal über den DALI-BUS (B) zu übertragen,
wobei das wenigstens eine DALI-Gerät (3a, 3b, 3c) zusätzlich dazu eingerichtet ist, die Änderung der Busspannung des DALI-Busses (B) im Ruhezustand auf den vorbestimmten Spannungswert (U2) innerhalb des oberen Spannungswertebereichs zu erfassen und auszuwerten:
- wobei das wenigstens eine Gerät (3a, 3b, 3c) dazu eingerichtet ist, die Änderung der Busspannung des DALI- Busses (B) im Ruhezustand auf den vorbestimmten Spannungswert (U2) und der Verringerung der Busspannung des DALI-Busses (B) ausgehend von dem vorbestimmten Spannungswert (U2) auf den Spannungswert (U3) innerhalb des unteren Spannungswertebereichs (DL) als das wenigstens ein DALI Signal gleichzeitig zu empfangen.

2. DALI System (1) gemäß einem der vorhergehenden Ansprüche, wobei
- der vorbestimmte Spannungswert (U2) kleiner als ein Spannungswert (U1) der Busspannung im Ruhezustand ist und das wenigstens eine Signalisierungsgerät (2) im angeschlossenen Zustand dazu eingerichtet ist, die Busspannung des DALI-Busses (B) im Ruhezustand auf den vorbestimmten Spannungswert (U2) zu begrenzen; oder
- der vorbestimmte Spannungswert (U2) größer als der Spannungswert (U1) der Busspannung im Ruhezustand ist und das wenigstens eine Signalisierungsgerät (2) im angeschlossenen Zustand dazu eingerichtet ist, die Busspannung des DALI-Busses (B) im Ruhezustand auf den vorbestimmten Spannungswert (U2) zu erhöhen.

3. DALI System (1) gemäß einem der vorhergehenden Ansprüche,
- wobei sich der vorbestimmte Spannungswert (U2) um 0,5 V oder mehr als 0,5 V, besonders vorzugsweise um 1 V oder mehr als 1 V, ganz besonders vorzugsweise um 3 V oder mehr als 3 V, von der Busspannung (U1) des DALI-Busses (B) im Ruhezustand unterscheidet.

4. DALI System (1) gemäß einem der vorhergehenden Ansprüche,
wobei das wenigstens eine Signalisierungsgerät (2) umfassend
- wenigstens eine Spannungsbegrenzungseinheit (Z1), vorzugsweise eine Zener-Diode, die dazu eingerichtet ist, die Busspannung des DALI- Busses (B) im Ruhezustand auf den vorbestimmten Spannungswert (U2) zu begrenzen, oder wenigstens eine Spannungserhöhungseinheit, vorzugsweise eine Spannungsquelle, die dazu eingerichtet ist, die Busspannung des DALI- Busses (B) im Ruhezustand auf den vorbestimmten Spannungswert (U2) zu erhöhen.

5. DALI System (1) gemäß einem der vorhergehenden Ansprüche,
wobei das wenigstens eine Signalisierungsgerät (2)
- einer Tasteranordnung (T1, ZI) mit wenigstens einem Taster (T1) entspricht,
die im angeschlossenen Zustand dazu eingerichtet ist, aufgrund einer Betätigung des Tasters (TI) durch einen Benutzer die Busspannung des DALI-Busses (B) auf den vorbestimmten Spannungswert (U2) für die Zeitdauer der Betätigung oder für eine vorbestimmte Zeitdauer zu ändern;
oder
- einer Relaisanordnung mit einem Relais entspricht, die im angeschlossenen Zustand dazu eingerichtet ist, aufgrund einer Betätigung des Relais durch einen Benutzer die Busspannung des DALI- Busses (B) auf den vorbestimmten Spannungswert (U2) für die Zeitdauer der Betätigung oder für eine vorbestimmte Zeitdauer zu ändern;
oder
- einer Sensoranordnung mit wenigstens einen Sensor entspricht, die im angeschlossenen Zustand dazu eingerichtet ist, aufgrund einer Erfassung durch den Sensor die Busspannung des DALI-Busses (B) auf den vorbestimmten Spannungswert (U2) für die Zeitdauer der Erfassung oder eine vorbestimmte Zeitdauer zu ändern.

6. DALI System (1) gemäß einem der vorhergehenden Ansprüche,
wobei das wenigstens eine DALI-Gerät (3a, 3b, 3c) im angeschlossenen Zustand dazu eingerichtet ist, durch Verringern der Busspannung des DALI-Busses (B) auf den Spannungswert (U3) innerhalb des unteren Spannungswertebereichs (DL) wenigstens ein DALI-Signal über den DALI-Bus (B) zu übertragen.

## Claims

1. A DALI System (1) having
- a DALI bus (B),
- at least one DALI device (3a, 3b, 3c),
and at least one signaling device (2),
- an upper voltage value range (DH) being established for the bus voltage of the DALI bus (B) for transmitting a high-level DALI signal via the DALI bus (B) according to the DALI standard, and the bus voltage of the DALI bus (B) being within the upper voltage value range (DH) in the idle state,
- a lower voltage value range (DL) being established for the bus voltage of the DALI bus (B) for transmitting a low-level DALI signal via the DALI bus (B) according to the DALI standard, and
- the at least one DALI device (3a, 3b, 3c) (Fig. 2: 10) being connected to the DALI bus (B) as a bus participant,
- the at least one signaling device (2) being connected to the DALI bus (B),
- the at least one DALI device (3a, 3b, 3c) being configured, in the connected state, to receive at least one DALI signal by detecting a reduction in the bus voltage of the DALI bus (B) in the idle state to a voltage value (U3) within the lower voltage value range (DL),
- the at least one signaling device (2) being configured to change the bus voltage of the DALI bus (B) in the idle state to a predetermined voltage value (U2),
**characterized in that**
the at least one signaling device (2) is further configured, in the connected state, to transmit at least one signal via the DALI bus (B) by changing the bus voltage to the predetermined voltage value (U2) within the upper voltage value range (DH),
the at least one DALI device (3a, 3b, 3c) also being configured to detect and evaluate the change in the bus voltage of the DALI bus (B) in the idle state to the predetermined voltage value (U2) within the upper voltage value range:
- the at least one device (3a, 3b, 3c) being configured, in the connected state, to receive the change in the bus voltage of the DALI bus (B) in the idle state to the predetermined voltage value (U2) and in the reduction of the bus voltage of the DALI bus (B) from the predetermined voltage value (U2) to the voltage value (U3) within the lower voltage value range (DL) as the at least one DALI signal.

2. The DALI system (1) according to any of the preceding claims, wherein
- the predetermined voltage value (U2) is less than the voltage value (U1) of the bus voltage in the idle state and the at least one signaling device (2) is configured, in the connected state, to limit the bus voltage of the DALI bus (B) in the idle state to the predetermined voltage value (U2); or
- the predetermined voltage value (U2) is greater than the voltage value (U1) of the bus voltage in the idle state and the signaling device (2) is configured, in the connected state, to increase the bus voltage of the DALI bus (B) in the idle state to the predetermined voltage value (U2).

3. The DALI system (1) according to any of the preceding claims,
- wherein the predetermined voltage value (U2) differs from the bus voltage (U1) of the DALI bus (B) in the idle state by 0.5 V or more than 0.5 V, particularly preferably by 1 V or more than 1 V, and very particularly preferably by 3 V or more than 3 V.

4. The DALI system (1) according to any of the preceding claims,
wherein the at least one signaling device (2) comprising
- at least one voltage limitation unit (Z1), preferably a Zener diode, which is configured to limit the bus voltage of the DALI bus (B) in the idle state to the predetermined voltage value (U2), or at least one voltage increase unit, preferably a voltage source, which is configured to increase the bus voltage of the DALI bus (B) in the idle state to the predetermined voltage value (U2).

5. The DALI system (1) according to any of the preceding claims,
wherein the at least one signaling device (2)
- corresponds to a switch arrangement (T1, Z1) having at least one switch (T1), which arrangement is configured, in the connected state, to change, on the basis of an actuation of the switch (T1) by a user, the bus voltage of the DALI bus (B) to the predetermined voltage value (U2) for the time period of the actuation or for a predetermined time period;
or
- corresponds to a relay arrangement having a relay, which arrangement is configured, in the connected state, to change, on the basis of an actuation of the relay by a user, the bus voltage of the DALI bus (B) to the predetermined voltage value (U2) for the time period of the actuation or for a predetermined time period;
or
- corresponds to a sensor arrangement having at least one sensor, which arrangement is configured, in the connected state, to change, on the basis of a detection by the sensor, the bus voltage of the DALI bus (B) to the predetermined voltage value (U2) for the time period of the detection or a predetermined time period.

6. The DALI system (1) according to any of the preceding claims,
wherein the at least one DALI device (3a, 3b, 3c) is configured, in the connected state, to transmit at least one DALI signal via the DALI bus (B) by reducing the bus voltage of the DALI bus (B) to the voltage value (U3) within the lower voltage value range (DL).

## Revendications

1. Système DALI (1) comportant
- un bus DALI (B),
- au moins un appareil DALI (3a, 3b, 3c),
et au moins un appareil de signalisation (2),
- dans lequel, selon la norme DALI, une plage de valeurs de tension supérieure (DH) est définie pour la tension de bus du bus DALI (B) pour la transmission d'un signal DALI comportant un niveau haut par l'intermédiaire du bus DALI (B), et la tension de bus du bus DALI (B) à l'état de repos se situe dans la plage de valeurs de tension supérieure (DH),
- dans lequel, selon la norme DALI, une plage de valeurs de tension inférieure (DL) est définie pour la tension de bus du bus DALI (B) pour la transmission d'un signal DALI comportant un niveau bas par l'intermédiaire du bus DALI (B), et
- dans lequel l'au moins un appareil DALI (3a, 3b, 3c) (Fig. 2 : 10) est connecté au bus DALI (B) en tant que participant au bus,
- dans lequel l'au moins un appareil de signalisation (2) est connecté au bus DALI (B),
- dans lequel l'au moins un appareil DALI (3a, 3b, 3c), à l'état connecté, est configuré pour recevoir au moins un signal DALI en détectant une réduction de la tension de bus du bus DALI (B) à l'état de repos à une valeur de tension (U3) dans la plage de valeurs de tension inférieure (DL),
- dans lequel l'au moins un appareil de signalisation (2) est configuré pour modifier la tension de bus du bus DALI (B) à l'état de repos à une valeur de tension prédéterminée (U2),
**caractérisé en ce que**
dans lequel l'au moins un appareil de signalisation (2), à l'état connecté, est en outre configuré pour transmettre au moins un signal par l'intermédiaire du bus DALI (B) en modifiant la tension de bus à la valeur de tension prédéterminée (U2) dans la plage de valeurs de tension supérieure (DH),
dans lequel l'au moins un appareil DALI (3a, 3b, 3c) est en outre configuré pour détecter et évaluer la modification de la tension de bus du bus DALI (B) à l'état de repos à la valeur de tension prédéterminée (U2) dans la plage de valeurs de tension supérieure :
- dans lequel l'au moins un appareil (3a, 3b, 3c) est configuré pour recevoir simultanément la modification de la tension de bus du bus DALI (B) à l'état de repos à la valeur de tension prédéterminée (U2) et la réduction de la tension de bus du bus DALI (B) à partir de la valeur de tension prédéterminée (U2) à la valeur de tension (U3) dans la plage de valeurs de tension inférieure (DL) en tant que l'au moins un signal DALI.

2. Système DALI (1) selon l'une des revendications précédentes, dans lequel
- la valeur de tension prédéterminée (U2) est plus faible qu'une valeur de tension (U1) de la tension de bus à l'état de repos et l'au moins un appareil de signalisation (2), à l'état connecté, est configuré pour limiter la tension de bus du bus DALI (B) à l'état de repos à la valeur de tension prédéterminée (U2) ; ou
- la valeur de tension prédéterminée (U2) est plus élevée que la valeur de tension (U1) de la tension de bus à l'état de repos et l'au moins un appareil de signalisation (2), à l'état connecté, est configuré pour augmenter la tension de bus du bus DALI (B) à l'état de repos à la valeur de tension prédéterminée (U2).

3. Système DALI (1) selon l'une des revendications précédentes,
- dans lequel la valeur de tension prédéterminée (U2) diffère de 0,5 V ou de plus de 0,5 V, de manière particulièrement préférée de 1 V ou de plus de 1 V, de manière très particulièrement préférée de 3 V ou de plus de 3 V, de la tension de bus (U1) du bus DALI (B) à l'état de repos.

4. Système DALI (1) selon l'une des revendications précédentes,
dans lequel l'au moins un appareil de signalisation (2) comprend
- au moins une unité de limitation de tension (Z1), de préférence une diode Zener, configurée pour limiter la tension de bus du bus DALI (B) à l'état de repos à la valeur de tension prédéterminée (U2), ou au moins une unité d'augmentation de tension, de préférence une source de tension, configurée pour augmenter la tension de bus du bus DALI (B) à l'état de repos à la valeur de tension prédéterminée (U2).

5. Système DALI (1) selon l'une des revendications précédentes,
dans lequel l'au moins un appareil de signalisation (2)
- correspond à un agencement de boutons-poussoirs (T1, Z1) comportant au moins un bouton-poussoir (T1) qui, à l'état connecté, est configuré pour modifier, en raison d'un actionnement du bouton-poussoir (T1) par un utilisateur, la tension de bus du bus DALI (B) à la valeur de tension prédéterminée (U2) pour la durée de l'actionnement ou pour une durée prédéterminée ;
ou
- correspond à un agencement de relais comportant un relais qui, à l'état connecté, est configuré pour modifier, en raison d'un actionnement du relais par un utilisateur, la tension de bus du bus DALI (B) à la valeur de tension prédéterminée (U2) pour la durée de l'actionnement ou pour une durée prédéterminée ;
ou
- correspond à un agencement de capteurs comportant au moins un capteur qui, à l'état connecté, est configuré pour modifier, en raison d'une détection par le capteur, la tension de bus du bus DALI (B) à la valeur de tension prédéterminée (U2) pour la durée de la détection ou pour une durée prédéterminée.

6. Système DALI (1) selon l'une des revendications précédentes,
dans lequel l'au moins un appareil DALI (3a, 3b, 3c), à l'état connecté, est configuré pour transmettre au moins un signal DALI par l'intermédiaire du bus DALI (B) en réduisant la tension de bus du bus DALI (B) à la valeur de tension (U3) dans la plage de valeurs de tension inférieure (DL).
